(19) Europäisches Patentamt / European Patent Office / Office européen des brevets

(11) **EP 2 410 349 B1**

(12) **EUROPEAN PATENT SPECIFICATION**

(45) Date of publication and mention
of the grant of the patent:
**03.05.2017 Bulletin 2017/18**

(51) Int Cl.:
**G01S 15/96** *(2006.01)* **G01S 7/539** *(2006.01)*

(21) Application number: **11250666.2**

(22) Date of filing: **19.07.2011**

(54) **Method and apparatus for underwater detection and fish school detection**

Verfahren und Vorrichtung zur Unterwasserdetektion und Fischschwarmdetektion

Procédé et appareil pour la détection sous-marine et la détection de bancs de poissons

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2010 JP 2010165426**

(43) Date of publication of application:
**25.01.2012 Bulletin 2012/04**

(73) Proprietor: **Furuno Electric Company Limited Hyogo-pref (JP)**

(72) Inventors:
• **Dubuis, Jerome ,**
Furuno Electric Co., Ltd.
**Nishinomiya-City, Hyogo-Pref. (JP)**
• **Shiraki, Rika ,**
Furuno Electric Co., Ltd.
**Nishinomiya-City, Hyogo-Pref. (JP)**
• **Onishi, Yuriko ,**
Furuno Electric Co., Ltd.
**Nishinomiya-City, Hyogo-Pref. (JP)**

(74) Representative: **Williams, Michael Ian et al Cleveland**
**10 Fetter Lane**
**London EC4A 1BR (GB)**

(56) References cited:
**JP-A- 2005 249 398**    **US-A- 5 561 641**
**US-A1- 2008 080 317**

## Description

## Technical Field

The present invention relates to a method and an apparatus for transmitting an underwater ultrasound signal and detecting a target object such as a fish school based on echo signals, and, more specifically to a method and an apparatus for providing discriminating information on the type of the target object such as fish species.

## Background of the Invention

Conventionally, underwater detection apparatus for transmitting an underwater ultrasound wave and detecting a target object based on a corresponding echo signal are known. As an example of such an underwater detection apparatus, various kinds of echo sounder apparatus are disclosed. Generally, such echo sounder apparatus transmits ultrasound signals under water and receives corresponding echo signals reflected on fish school(s) or the like to detect the fish school(s). As a kind of such echo sounder apparatus, for example in JP40-25555B, an echo sounder apparatus which transmits ultrasound signals at two different frequencies to carry out fish school detection is disclosed.

Currently, annual fish catches have been limited per fish species, per country and per ship for protection of global marine resources. For example, in TAC (Total Allowable Catch), annual fish catches are limited per country and per fish species. Whereas, in IVQ (Individual Vessel Quota), annual fish catches are further limited per fish species and per fishing boat. If one caught fish more than the fish catch limitations, various kinds of penalties such as a reduction of fish catch of the following year will be imposed.

Therefore, it is desirable for every fishing boat to reliably catch only targeted fish species.

However, it is not easy to accurately discriminate fish species. For example, when receiving an echo signal from a fish school as well as an echo signal reflected from the water bottom, if the fish species discrimination process is performed not only on the echo signal from the fish school but on the echo also containing the echo signal reflected from the water bottom, an accurate fish species discrimination is not possible.

The present invention is made in view of the situations described above, and provides a more accurate discriminating method and apparatus for providing target-specific information of target objects such as the type of the target object.

US 2008/0080317 A1 discloses a fishfinder for identifying and measuring the length of fish under a ship. The fishfinder allows an operator to specify a particular area on the echogram, in order to obtain information such as fish count and fish size in that area.

JP 2005 249398 A discloses a fishfinder with good distance resolution and good detection range. The fishfinder is based on FM transmission and pulse compression technology.

In one embodiment, the present invention provides a method and an apparatus for better discriminating fish species, when two or more kinds of fish schools or two or more kinds of fish exist in the sea in any situation.

According to one aspect of the present invention, there is provided an underwater detection apparatus as claimed in claim 1.

With this configuration, when specifying the operation area for calculating the underwater target discriminating information, the apparatus judges on the reliability of the echo signals within the specified operation area, based on the relationship between the water bottom (based on the depth information), and the specified area. As a result of the judgment decision, a more appropriate operation area for calculating the target discriminating information is established. Namely, rejecting water bottom echo signals when the water bottom is within the specified operation area, or rejecting echo signals for which depth information is not available due to air bubble blocking for example, enables to establish an appropriate operation area.

When the depth information is not available at a given first timing, the operation area setting module may search for the depth information at a different second timing, separated from said first timing by a predetermined time interval, and depending on the search result, it is decided whether said first timing at which the depth information is not available is set into the application area or not.

This configuration shows a specific method to establish the application area when there exists a timing within the specified area when the depth information is not available.

Relative to said first timing at which the depth information is not available, the operation area setting module may search for the depth information at a plurality of different timings, separated from said first timing by a predetermined time interval.

Considering the origin of a time axis set on said first timing at which the depth information is not available, the operation area setting module may search for the depth information on both sides of the time axis.

This configuration shows a specific method to search for the depth information. By applying this method, the application area can be established in more details.

Considering the origin of the time axis set on said first timing at which the depth information is not available, when searching for the depth information on both sides of the time axis, if the depth information could be found on both sides, the operation area setting module may not set said first timing at which the depth information is not available into the application area.

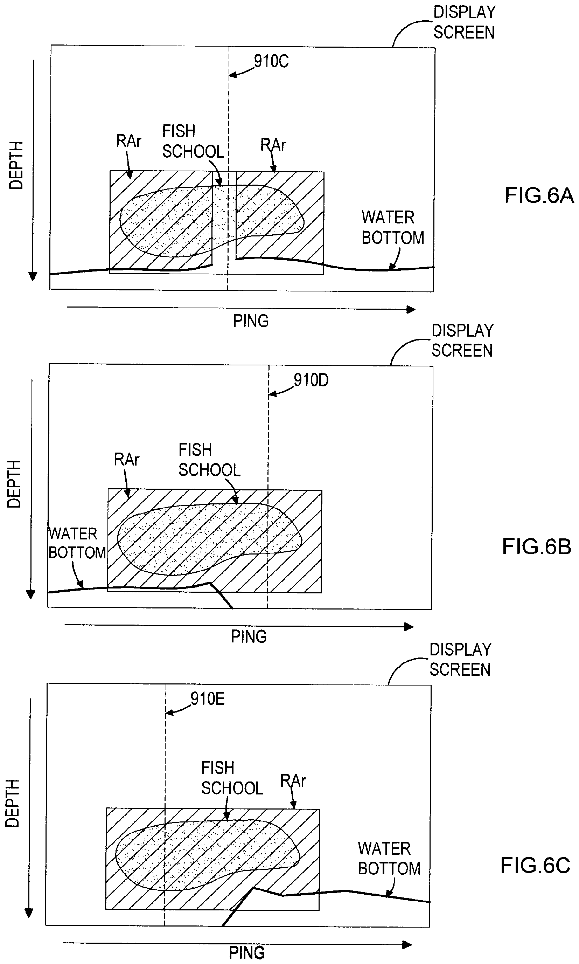

This configuration shows a method to decide whether the timing at which the depth information is not available is set in the application area or not. As such situation, where the depth information is temporarily unavailable, is due to air bubble blocking (later shown in Fig. 6A), when depth information is found during the search, the echo that occurred at the timing at which the depth information is not available is not set into the application area. Therefore, echo signal sections blocked by air bubbles can be rejected and more accurate target discriminating information can be calculated.

When the depth information is detected between the shallowest depth and the deepest depth, the operation area setting module may establish the application area from the shallowest depth to the depth corresponding to the depth information.

This configuration shows a specific method to establish the application area when the depth information is between the shallowest depth and the deepest depth. When the depth information is between the shallowest depth and the deepest depth, by establishing the application area from the shallowest depth to the depth corresponding to the depth information, enables to reject the water bottom echo from the calculation of the target discriminating information. Thereby, even if the water bottom is within the specified area, an accurate calculation of the target discriminating information is possible.

The apparatus may acquire echo signals from ultrasound signals transmitted at different frequencies. The target discriminating information calculation module may include a reflection strength difference calculation module for calculating difference values of the echo signals at different frequencies, a histogram calculation module for calculating a histogram of the difference values, and a similarity calculation module for calculating a characteristic similarity between the histogram of the difference values and a reference histogram that is set for every type of target object.

This configuration shows a more specific configuration of the target discriminating information calculation module.

The difference value of the echo signals at different frequencies may be the difference value of volume backscattering strength SV of the echo signals at different frequencies.

This configuration shows a case where the difference of volume backscattering strength $\Delta$SV is used as target discriminating information.

According to another aspect of the present invention, an echo sounder is provided. The echo sounder comprises the structure of the above underwater detection apparatus and the target object may be at least one of a fish school or a single fish.

This configuration shows an example where the above underwater detection apparatus is used as an echo sounder. Thereby, by using the above underwater detection apparatus, the discrimination of fish species of fish schools or single fishes can be more accurately performed than on conventional apparatus.

According to another aspect of the invention, there is provided a method of detecting a target object as claimed in claim 14.

With this configuration, when specifying the operation area for calculating the underwater target discriminating information, the method judges on the reliability of the echo signals within the specified operation area, based on the relationship between the water bottom (based on the depth information), and the specified area. As a result of the judgment decision, a more appropriate operation area for calculating the target discriminating information is established. Namely, rejecting water bottom echo signals when the water bottom is within the specified operation area, or rejecting echo signals for which depth information is not available due to air bubble blocking for example, enables to establish an appropriate operation area.

The target object may be at least one of a fish school or a single fish.

According to the aspects of the present invention, target-specific information of target objects such as the type of the target object can be provided more accurately to an operator.

**Brief Description of the Drawings**

The present disclosure is illustrated by way of example and not by way of limitation in the figures of the accompanying drawings, in which the like reference numerals indicate like elements and in which:

Fig. 1 is a block diagram showing an embodiment of an echo sounder apparatus 1 according to the present invention;
Fig. 2 is a flowchart showing an outline of the processing performed by a fish species discriminating information calculation module 40, a display control module 50, and a display 60;
Fig. 3 is a flowchart showing the calculation flow of volume backscattering strength difference $\Delta$SV;
Fig. 4 is a flowchart showing the establishing process of the application area RAr for the histogram calculation;

Figs. 5A and 5B are views outlining the establishment of the application area RAr for the histogram calculation;
Figs. 6A, 6B and 6C are views outlining the establishment of the application area RAr for the histogram calculation;
Fig. 7 is a flowchart showing the similarity calculation processing;
Figs. 8A and 8B are charts illustrating the concept of likelihood Lx;
Fig. 9 is a view showing an example of display screen; and
Fig. 10 is a magnification view of the histogram display module 600 of a display screen.

## Detailed Description

Hereinafter, an echo sounder apparatus according to an embodiment of the present invention is described with reference to the accompanying drawings. Note that, although the echo sounder apparatus is described herein as an example of the application of the present invention, the technical features of the present invention described below may also be applied to ultrasound detection apparatus that transmit an ultrasound signal and perform a target object detection based on an echo signal corresponding to the ultrasound signal. Also, fish species discrimination is shown herein as an example, but it can be applied to other discrimination of target-specific information such as fish length discrimination.

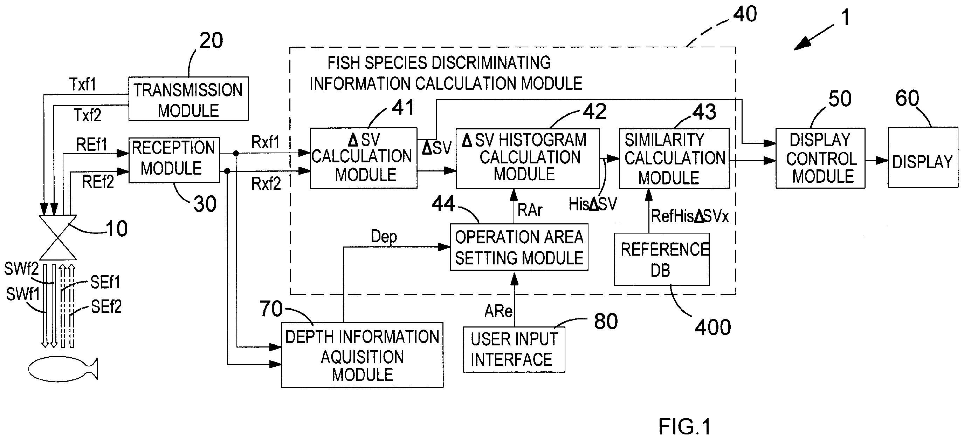

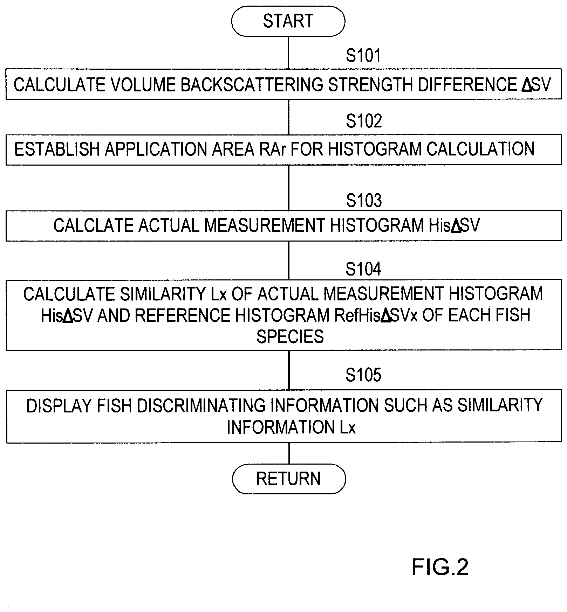

Fig. 1 is a block diagram showing an embodiment of an echo sounder apparatus 1 according to the present invention. Fig. 2 is a flowchart showing an outline of the processing performed by a fish species discriminating information calculation module 40, a display control module 50, and a display 60.

The echo sounder apparatus 1 includes a transducer 10, a transmission module 20, a reception module 30, a fish species discriminating information calculation module 40, a display control module 50, a display 60, a depth information acquisition module 70, and a user input interface 80.

The transmission module 20 generates an ultrasound transmission signal at a predetermined frequency and outputs it to the transducer 10. The transmission module 20 is configurable so that it can generate ultrasound transmission signals of a plurality of frequencies, and it generates ultrasound transmission signals of at least two different frequencies. For example, the transmission module 20 generates an ultrasound transmission signal at 60 kHz as a first frequency $f1$ and an ultrasound transmission signal at 200 kHz as a second frequency $f2$. Note that the combination of frequencies is not limited to the above frequencies and they may be selected suitably based on a target fish species or the like. Below, a case where the above-mentioned first and second frequencies $f1$ and $f2$ are used is described.

The transmission module 20 outputs an ultrasound transmission signal Txf1 at the first frequency $f1$ and an ultrasound transmission signal Txf2 at the second frequency $f2$ at a predetermined time interval (every ping) to the transducer 10.

The transducer 10 includes an ultrasound transducer having a structure adapted to each of the frequencies of the above ultrasound transmission signals. The transducer 10 transmits ultrasound waves SWf1 and SWf2 under water, based on the ultrasound transmission signals Txf1 and Txf2 transmitted at each of the frequencies by the transmission module 20. The ultrasound transducer 10 receives reflection waves SEf1 and SEf2, which are the result of the transmitted ultrasound waves SWf1 and SWf2 at respective frequencies being reflected on a target object such as a fish school and the water bottom, then generates echo signals REf1 and REf2 for respective frequencies, and then outputs them to the reception module 30.

The reception module 30 samples at a predetermined sampling timing interval each echo signal REf1 and REf2 at respective frequencies outputted by the transducer 10 at every ping, and then generates reception data Rxf1 and Rxf2 for each respective frequency. This sampling timing interval is set based on distance resolution in the depth direction. The reception module 30 outputs the reception data Rxf1 and Rxf2 for every ping to the fish species discriminating information calculation module 40.

The reception module 30 also outputs at least one of the reception data Rxf1 and Rxf2 for every ping to the depth information acquisition module 70. The depth information acquisition module 70 calculates the depth information Dep from at least one of the reception data Rxf1 and Rfx2, using a known calculation method. The depth information acquisition module 70 outputs the calculated depth information Dep to an operation area setting module 44 within the fish species discriminating information calculation module 40. Here, if the depth information cannot be calculated due to situations such as air bubble blocking the propagation of ultrasound waves in water, the depth information Dep is not outputted to the operation area setting module 44.

As well as performing all sorts of user input operations, the user input interface 80 provides the ability of inputting a setting area ARe for the calculation of a histogram, as a distinctive user input feature of the embodiment according to the present invention. For example, in the case of a built-in touch panel display 60, when an operator, such as a fisherman, looking at the later mentioned fish species discriminating ∆SV (volume backscattering strength difference) view touches the ∆SV view, the user input feature reads the coordinates of the position touched by the operator and acquires the setting area ARe for the calculation of the histogram. The user input interface 80 outputs the acquired setting area ARe to the operation area setting module 44 within the fish species discriminating information calculation module 40. User input interface 80 is referred as "operation area specification means" in the claims.

The fish species discriminating information calculation module 40 includes a ΔSV (volume backscattering strength difference) calculation module 41, a ΔSV histogram calculation module 42, a similarity calculation module 43, an operating area setting module 44 and a reference DB (database) 400. With the exclusion of the operating area setting module 44, the fish species discriminating information calculation module 40 is referred as "target discriminating information calculation means" in the claims.

The fish species discriminating information calculation module 40 performs the calculation of the fish species discriminating information, according to the flow S101 to S104 as shown in Fig. 2.

The ΔSV calculation module 41, within the fish species discriminating information calculation module 40, calculates a volume backscattering strength difference ΔSV from the reception data at every frequency inputted from the reception module 30 (Fig. 2: S101).

The operating area setting module 44, within the fish species discriminating information calculation module 40, establishes an application area RAr for the histogram calculation, based on the setting area ARe provided by the user input interface 80 and the depth information Dep provided by the depth information acquisition module 70 (Fig. 2: S102).

The ΔSV histogram calculation module 42, within the fish species discriminating information calculation module 40, calculates an actual measurement histogram HisΔSV, based on the ΔSV data within the application area RAr, established by the operation area setting module 44 (Fig. 2: S103).

The similarity calculation module 43, within the fish species discriminating information calculation module 40, calculates a similarity Lx, based on the actual measurement histogram HisΔSV and a reference histogram RefHisASVx stored beforehand in the reference DB 400 for every fish species X (Fig. 2: S104).

The display control module 50 displays on the screen, depending on the needs, fish species discriminating information, such as the actual measurement histogram HisΔSV, or the reference histogram RefHisΔSVx of the fish species, or the similarity Lx, or a ΔSV echogram based on the volume backscattering strength difference ΔSV (Fig. 2: S105). Fish species discriminating information items can for example be specified with the user input interface 80.

Thereby, necessary fish species discriminating information can be provided to an operator such as a fisherman.

The sequential flow explained above for fish species discriminating information calculation is implemented in the fish species discriminating information calculation module 40 and specifically described hereinafter.

### <Calculation Method of Volume Backscattering Strength Difference ΔSV>

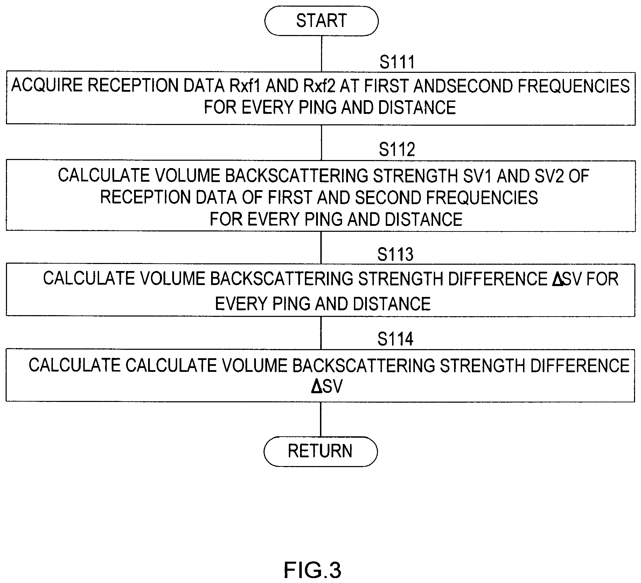

Fig. 3 is a flowchart showing the calculation flow of volume backscattering strength difference ΔSV.

The ΔSV calculation module 41 calculates a volume backscattering strength SV from the reception data at every frequency inputted from the reception module 30. Specifically, when the first frequency f1 and the second frequency f2 are used, the ΔSV calculation module 41 acquires the reception data Rxf1, corresponding to the first frequency f1 and the reception data Rxf2, corresponding to the second frequency f2 (Fig. 3: S111).

The ΔSV calculation module 41 calculates a volume backscattering strength SV1 from the acquired reception data Rxf1, and a volume backscattering strength SV2 from the acquired reception data Rxf2 (Fig. 3: S 112). Here, the ΔSV calculation module 41 calculates the volume backscattering strengths SV1 and SV2 for every reception data along the depth direction and for every ping.

The ΔSV calculation module 41 calculates the volume backscattering strength difference ΔSV for every position along the depth direction and for every ping (Fig. 3: S113). The volume backscattering strength difference ΔSV is calculated by subtracting the volume backscattering strength SV2 from the volume backscattering strength SV1 (i.e., calculating ΔSV=SV1 - SV2). Such a volume backscattering strength difference ΔSV shows different characteristics depending on fish species. For example, the volume backscattering strength difference ΔSV distribution differs between mackerel and herring.

Thus, by calculating the volume backscattering strength difference ΔSV, one fish species discriminating information can be acquired. Then, as shown in the block diagram of Fig. 1, such a volume backscattering strength difference ΔSV is outputted to the display control module 50 (Fig. 3: S 114). Thereby, an echogram of the volume backscattering strength difference ΔSV can be displayed on the display 60 as one type of fish species discriminating information. By watching this display, a fisherman can recognize the distribution of fish schools in the sea and can set the setting area ARe for the calculation of the above mentioned histogram.

### <Application Area RAr Setting Method for Histogram Calculation >

The volume backscattering strength difference ΔSV outputted by the ΔSV calculation module 41 for every position along the depth direction and for every ping is inputted into the ΔSV histogram calculation module 42. Also, the application area RAr for the calculation of a histogram is outputted from the operating area setting module 44 and inputted into the ΔSV histogram calculation module 42.

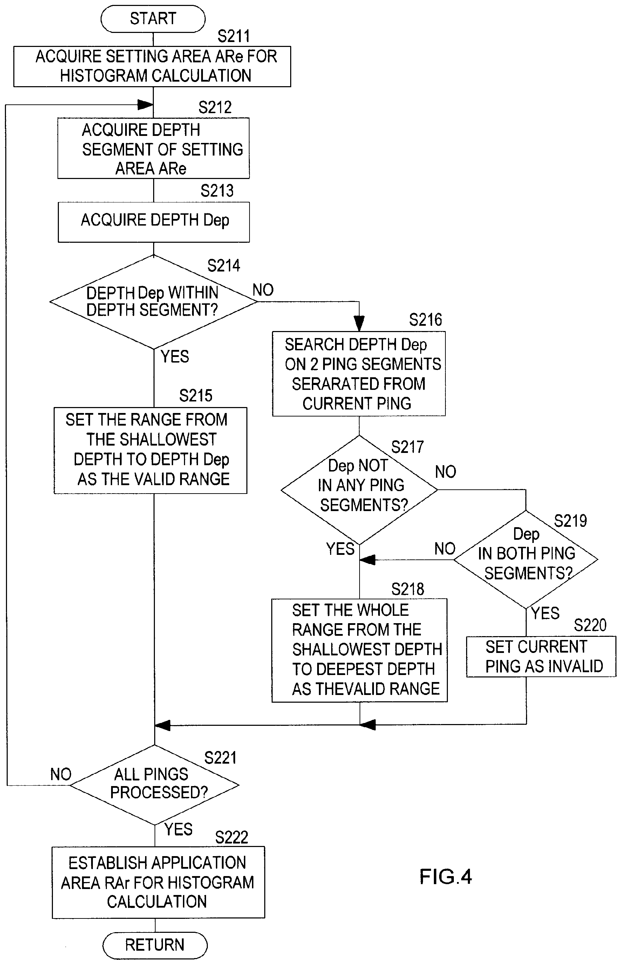

The operating area setting module 44 establishes the application area RAr for the histogram calculation, based on the setting area ARe outputted by the user input interface 80 for the histogram calculation, and the depth information Dep outputted by the depth information acquisition module 70. Fig. 4 is a flowchart showing the establishing process of the application area RAr for the histogram calculation.

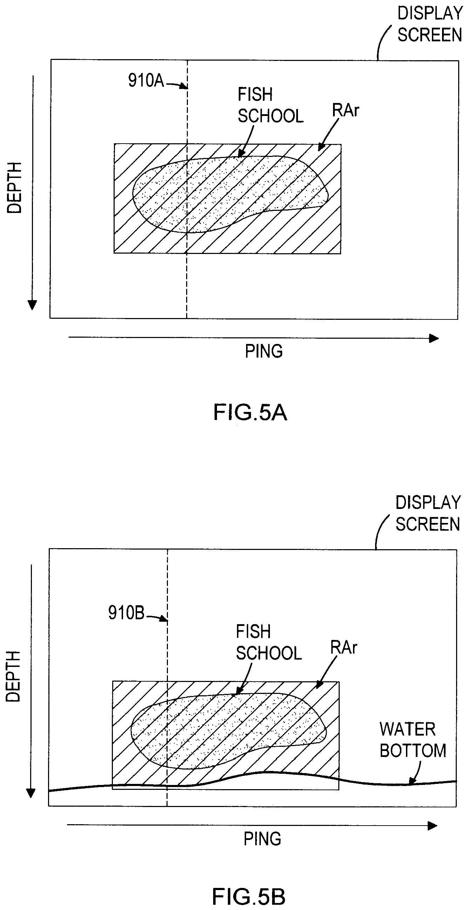

Figs. 5 and 6 also show views outlining the establishment of the application area RAr for the histogram calculation. In the setting area ARe of Fig. 5A, the water bottom line is inexistent for every position along the depth direction and for every ping. In the setting area ARe of Fig. 5B, the water bottom line exists for every position along the depth direction and for every ping. Figs. 6A, 6B and 6C show mixed cases, where the water bottom exists (is detected) on some pings, and where the water bottom is inexistent (is not detected) on some other pings. Fig. 6A shows a case where the setting area ARe, made of a plurality of pings, contains a certain number of pings for which the water bottom is not detected. Fig. 6B shows a case of a setting area ARe, made of a plurality of pings, where the water bottom is detected for a certain number of pings and where the water bottom is not detected after these pings. Fig. 6C shows a case of a setting area ARe, made of a plurality of pings, where the water bottom is not detected for a certain number of pings and where the water bottom is detected after these pings.

The operation area setting module 44 acquires the setting area ARe from the user input interface 80 (Fig. 4: S211).

The operation area setting module 44 performs the processing explained hereafter for every ping within the setting area ARe.

First of all, the operation area setting module 44 establishes a depth segment set by the setting area ARe (Fig. 4: S212). Here, the depth segment of a ping corresponds to the segment going from the shallowest depth to the deepest depth in the setting area ARe.

Then, the operation area setting module 44 acquires depth Dep from the depth information acquisition module 70 (Fig. 4: S213). The depth acquired from depth Dep corresponds to the position of the water bottom.

Then, the operation area setting module 44 determines whether depth Dep is within the depth segment or not (Fig. 4: S214).

If depth Dep is between the shallowest depth and the deepest depth in the setting area ARe, the operation area setting module 44 establishes the interval between the shallowest depth and the depth corresponding to the depth information Dep as the valid depth range in the application area RAr (Fig. 4: S214Yes → S215). Such situation is shown on PING910B in Fig. 5B. On PING910B of Fig. 5B, the interval going from depth Dep to the deepest depth corresponds to the water bottom area and this interval is not used for the fish species discrimination, whereas the interval between the shallowest depth and depth Dep is used for fish species discrimination.

If depth Dep is not available or if depth Dep is not between the shallowest depth and the deepest depth at the ping (referred as "first timing" in the claims) where the valid depth range is set, the operation area setting module 44 searches depth Dep on different pings (referred as "second timing" in the claims), separated from the considered ping by a predetermined position (Fig. 4: S214No → S216). Here, considering the ping where the valid depth range is set as the origin, the search for depth Dep is performed for example on two segments of pings (for example each segment is made of 3 pings) separated from the origin by a given number of pings (for example 5 pings).

By searching depth Dep in ping segments separated from the ping where the valid depth range is set, as shown in Figs. 5 and 6 the operation area setting module 44 can tell if depth Dep cannot be acquired due to a temporary bubble blocking or due to an inappropriate setting of the maximum detection range of the echo sounder. It can also tell if the water bottom is present in the setting area ARe until a given ping and disappears in the remaining pings, or if the water bottom is not present until a given ping and appears in the remaining pings. Specially, by performing the depth Dep search on a plurality of pings enables to make a more reliable judgment.

If the operation area setting module 44 does not find depth Dep in any of the pings of the ping segments (Fig. 4: S217Yes), the whole range going from the shallowest depth to the deepest depth (i.e., the depth segment set by the operator) is used as it is and set as the valid depth range (Fig. 4: S218). Such situation corresponds to the situation of PING910A in Fig. 5A. In the case of PING910A in Fig. 5A, as the water bottom is simply not within the setting area ARe, the whole depth range of the setting area ARe can be used as it is for the fish species discrimination.

If the operation area setting module 44 finds depth Dep in at least one of the pings within the ping segments (Fig. 4: S217No), it checks if depth Dep is present in both ping segments (Fig. 4: S219).

If the operation area setting module 44 finds depth Dep in only one of the ping segments (Fig. 4: S219No), the whole range going from the shallowest depth to the deepest depth (i.e., the depth segment set by the operator) is used as it is and set as the valid depth range (Fig. 4: S218). Such situation corresponds to the situation of PING910D in Fig. 6B and the situation of PING910E in Fig. 6C. In the cases of PING910D in Fig. 6B and PING910E in Fig. 6C, as the water bottom is below the setting area ARe, the whole depth range of the setting area ARe can be used as it is for the fish species discrimination.

If the operation area setting module 44 finds depth Dep in both ping segments (Fig. 4: S219Yes), the ping where the valid depth range is set, is set as an invalid ping (Fig. 4: S220). Such situation corresponds to the situation of PING910C in Fig. 6A. In the case of PING910C in Fig. 6A, as depth Dep is temporarily not available at the considered ping, it can be considered, with a high probability, to be due to an air bubble blocking condition. Therefore, as the echo of the considered ping got affected by air bubbles, it is highly probable that the volume backscattering strength SV of the fish school could not be accurately calculated. Thereby, the considered ping is set as an invalid ping, and it is not used in the later mentioned fish species discrimination.

The operation area setting module 44 repeats the above mentioned valid depth range setting process until all pings within the setting area ARe are processed (Fig. 4: S221No). Once the operation area setting module 44 has set the valid depth range for each ping within the setting area ARe, the operation area setting module 44 establishes the application area RAr for the histogram calculation using the valid depth range of the pings that have not be invalidated (Fig. 4: S222).

By performing such processing, an application area RAr can be established in such situations as shown in Figs. 5 and 6.

### <Case Where the Water Bottom Is Not within the Setting Area ARe>

As shown in Fig. 5A, in the case where the maximum detection range is too short for the water bottom to be detected (displayed) or in the case where the setting area ARe is set so that the water bottom is not included in the setting area ARe, the whole depth segment is set as the valid depth range for every ping within the setting area ARe. Namely, the setting area ARe is used as it is and becomes the application area RAr. Furthermore, if the water bottom is detected (displayed) but not included within the setting area ARe, identically the setting area ARe becomes the application area RAr without any change.

### <Case Where the Water Bottom Is Within the Setting Area ARe on Every Ping of the Setting Area ARe>

As shown in Fig. 5B, in the case where the water bottom is within the setting area ARe on every ping of the setting area ARe, the interval between the shallowest depth and depth Dep is set as the valid depth range for every ping of the setting area ARe. Namely, the area between the shallowest depth of the setting area ARe and the depth Dep of every ping is set as the application area RAr.

### <Case of the Presence of an Area Within the Setting Area ARe Where Depth Dep Is Unavailable Due to Air Bubble Blocking>

As shown in Fig. 6A, in the case of the presence of air bubbles at given pings within the setting area ARe, pings without depth information Dep can temporarily be detected in the above mentioned process. Also, as the echoes of these pings are affected by the presence of air bubbles, these echoes should be excluded from the fish species discrimination. Therefore, the application area RAr is established only with the pings remaining after removing the pings for which the depth information Dep is not available due to air bubble blocking.

### <Case Where an Area With Water Bottom Existence and an Area Without Water Bottom Existence are Both Present Within the Setting Area ARe>

As shown in Fig. 6B, in the case the water bottom is present until a given ping and disappears in the remaining pings, or as shown in Fig. 6C, in the case the water bottom is not present until a given ping and appears in the remaining pings, the interval between the shallowest depth and depth Dep is set as the valid depth range for every ping where the water bottom is present, and the whole depth segment is set as the valid depth range for every ping where the water bottom is not present. Namely, when the water bottom is present, the application area RAr is established until the water bottom, and when the water bottom is not present, the whole depth range is established as the application area RAr.

Using the operation area setting module 44 according to the embodiment of the present invention, depending on the situation within the setting area ARe set for fish species discrimination purposes, an appropriate application area RAr for fish species discrimination can be established.

In order to perform the fish species discrimination of a fish school, the application area RAr, which is established depending on such conditions as the relative position of the water bottom, the condition of the echo signal (such as the air bubble blocking condition), and the nondetection of water bottom situation due to the maximum range setting, is inputted into the $\Delta$SV histogram calculation module 42.

The $\Delta$SV histogram calculation module 42 calculates an actual measurement histogram His$\Delta$SV based on the volume backscattering strength difference $\Delta$SV data, conforming to the application area RAr, established by the operation area setting module 44 for the histogram calculation.

The $\Delta$SV histogram calculation module 42 calculates the actual measurement histogram His$\Delta$SV based on the volume backscattering strength difference $\Delta$SV data within the application area RAr (Fig. 2: S103). If fish species are the same, the actual measurement histograms His∆SV of the volume backscattering strength difference ∆SV have substantially the same characteristics, and if the fish species are different, it exhibits completely different characteristics. For example, for mackerel and herring, the position of the peak of the volume backscattering strength difference ∆SV histogram along the ∆SV axis and the dispersion of data (standard deviation, variance) along the ∆SV axis are different. Therefore, by simply using such actual measurement histogram His∆SV of the volume backscattering strength difference ∆SV enables to get fish species discriminating information. Here, as mentioned above, as volume backscattering strength difference ∆SV data free of the influence of water bottom or air bubble blocking is used, the actual measurement histogram His∆SV of the targeted fish school can be calculated.

The ∆SV histogram calculation module 42 outputs the calculated actual measurement histogram His∆SV to the similarity calculation module 43.

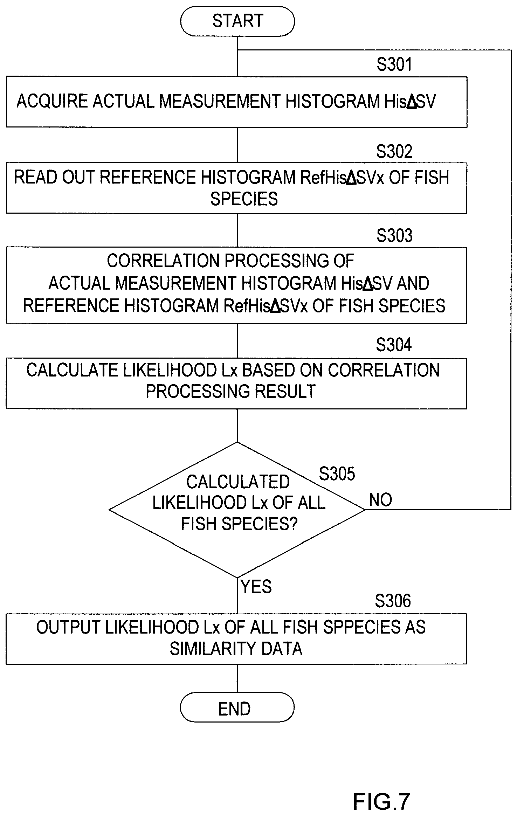

The similarity calculation module 43 calculates a similarity Lx, using the actual measurement histogram His∆SV, by performing the processing as shown in the flowchart of Fig. 7. Fig. 7 is a flowchart showing the similarity calculation processing.

The similarity calculation module 43 first acquires the actual measurement histogram His∆SV from the ∆SV histogram calculation module 42 (Fig. 7: S301).

The similarity calculation module 43 reads out a reference histogram RefHis∆SVx of a fish species X from the reference DB (database) 400 for the calculation of the similarity data (Fig. 7: S302).

The reference histogram RefHis∆SVx is stored beforehand for every fish species X in the reference DB 400. The reference histogram RefHis∆SVx of a fish species X, specified by a read-out control from the similarity calculation module 43, is read out from the reference DB 400 to the similarity calculation module 43.

The similarity calculation module 43 performs a correlation processing operation using the following equation and outputs the correlation processing result rSX, based on the actual measurement histogram His∆SV and the reference histogram RefHis∆SVx of the fish species X (Fig. 7: S303). Note that in the following equation, HSV(k) corresponds to each element of the actual measurement histogram His∆SV along the ∆SV axis, and MeanHSV corresponds to the mean value of the actual measurement histogram His∆SV. Moreover, RHSV(k) corresponds to each element of the reference histogram RefHis∆SVx along the ∆SV axis, and MeanRHSV corresponds to the mean value of the reference histogram RefHis∆SVx.

$$rSX = \frac{\sum_{k=1}^{M}\left[\left(HSV(k) - MeanHSV\right)\cdot\left(RHSV(k) - MeanRHSV\right)\right]}{\sqrt{\sum_{k=1}^{M}\left(HSV(k) - MeanHSV\right)^2}\cdot\sqrt{\sum_{k=1}^{M}\left(RHSV(k) - MeanRHSV\right)^2}} \quad\ldots(1)$$

The similarity calculation module 43 calculates the likelihood of the fish species X based on the correlation processing result rSX of the fish species X, using the following equation (Fig. 7: S304).

$$Lx = 100 \cdot rSX^2 \quad\ldots(2)$$

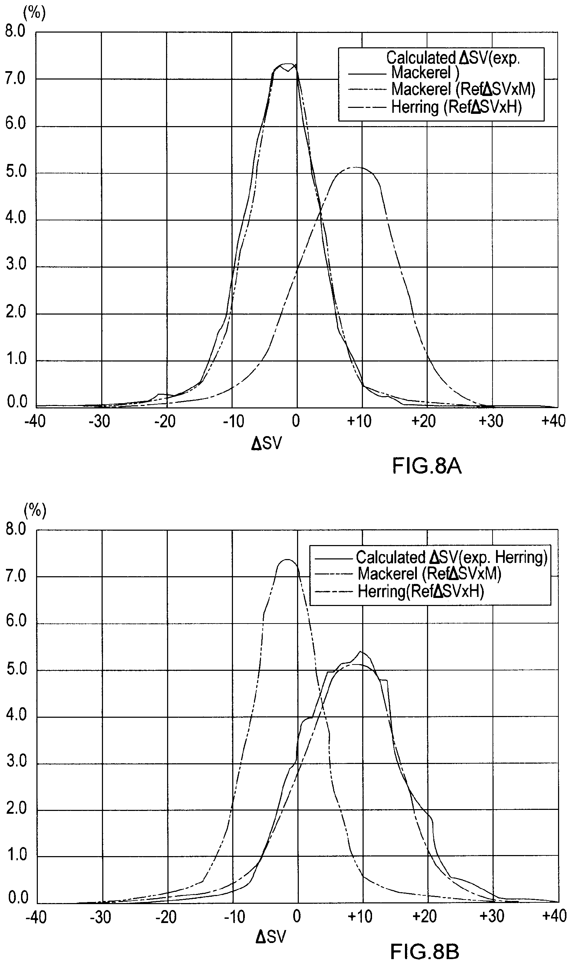

Such likelihood Lx has the following features. Figs. 8A and 8B are charts illustrating the concept of the likelihood Lx, where Fig. 8A shows a case where the actual measurement histogram His∆SV is a mackerel histogram, and Fig. 8B shows a case where the actual measurement histogram His∆SV is a herring histogram. Hereinafter, a particular case, where the likelihood Lx is calculated for each actual measurement histogram His∆SV, using the reference histogram RefHis∆SVxM for mackerel and the reference histogram RefHis∆SVxH for herring, is described.

As shown in Fig. 8A, when the actual measurement histogram His∆SV is a mackerel histogram, the actual measurement histogram His∆SV and the reference histogram RefHis∆SVxM of mackerel have very similar characteristics, and the correlation processing result rSX approaches "1" as a matter of course. On the other hand, the characteristic of the actual measurement histogram His∆SV does not comparatively match the characteristic of the reference histogram RefHis∆SVxH of herring and thus, the correlation processing result rSX is lower than "1" by a certain amount. Therefore, the likelihood LxM of mackerel approaches "100" and the likelihood LxH of herring is significantly lower than "100".

Whereas, when the actual measurement histogram His∆SV is a herring histogram as shown in Fig. 8B, the characteristic of the actual measurement histogram His∆SV does not comparatively match the characteristic of the reference histogram RefHis∆SVxM of mackerel and thus, the correlation processing result rSX is lower than "1" by a certain amount. On the other hand, the actual measurement histogram His∆SV and the reference histogram RefHis∆SVxH of herring have very similar characteristics, and the correlation processing result rSX approaches "1" as a matter of course. Therefore, the likelihood LxM of mackerel is significantly lower than "100" and the likelihood LxH of herring approaches "100".

If the similarity calculation module 43 has not performed such likelihood Lx calculation for all designated fish species, the similarity calculation module 43 reads out the reference histogram of another fish species, and then calculates the likelihood Lx in the same way as in the above mentioned flow (Fig. 7: S305No → S301).

Thus, by using the likelihood Lx for every fish species X, the probability of having a given fish species (i.e., the probability of the fish species to be mackerel or the probability of the fish species to be herring) can be expressed numerically. Also, as the likelihood Lx is not affected by water bottom or air bubbles, it conforms to the fish species of the targeted fish school. Thereby, a more accurate fish species discriminating information can be provided.

After calculating the likelihood Lx of all designated fish species, the similarity calculation module 43 outputs this set of likelihood Lx data as the similarity data to the display control module 50 (Fig. 7: S305Yes → S306). Here, the similarity calculation module 43 also outputs the actual measurement histogram HisΔSV and the reference histogram RefHisΔSVx of each fish species for which the likelihood Lx is calculated to the display control module 50.

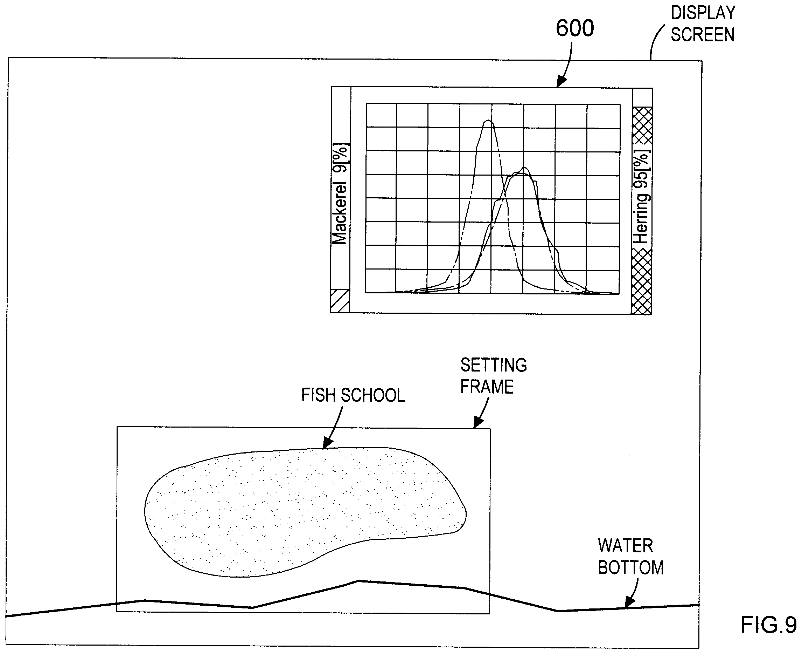

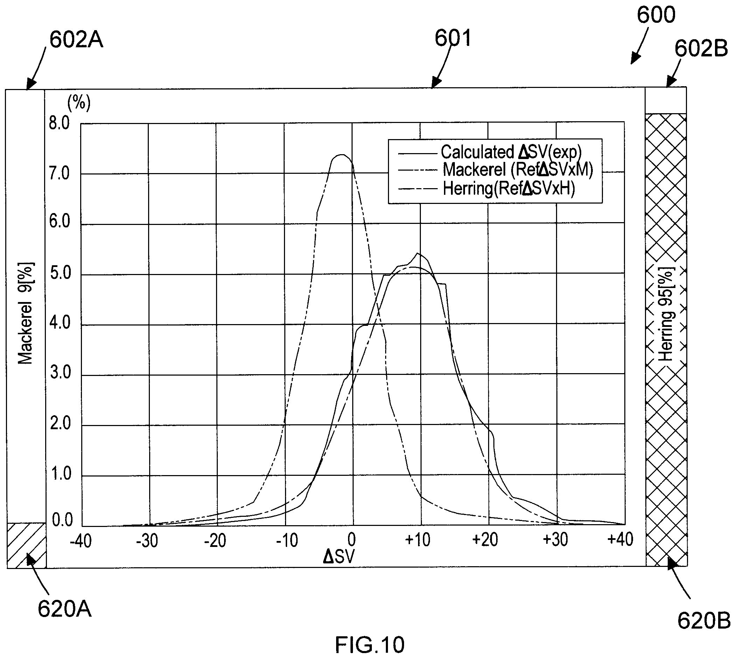

The display control module 50 controls the display 60 so that a screen image as shown in Fig. 9 is displayed by using the similarity data (i.e., the likelihood Lx for every fish species) outputted by the similarity calculation module 43, each of the histograms and the above mentioned ΔSV echogram. The display 60 is implemented with a liquid crystal display or the like, for displaying an image based on the display control by the display control module 50. Fig. 9 is a view showing an example of display screen displayed on the display 60, and Fig. 10 is a magnification view of a histogram display module 600 displayed on the display screen.

As shown in Fig. 9, the ΔSV echogram, based on the volume backscattering strength difference ΔSV from the ΔSV calculation module 41, is displayed as the base display on the display screen. As well as fish schools or the like, water bottom is displayed on this base echogram display. Also, a setting frame corresponding to the setting area ARe inputted from the user input interface 80 is also displayed on the base display. Then, as part of the display screen, a histogram display module 600 is displayed in a window.

As shown in Fig. 10, the histogram display module 600 includes a histogram display window 601 and likelihood display windows 602A and 602B. More specifically, the histogram display window 601 is arranged at the centre of the histogram display 600, and a likelihood display window 602A of the likelihood LxM of mackerel and a likelihood display window 602B of the likelihood of herring are arranged on both sides (left and right) or above and below the histogram display module 600.

The actual measurement histogram HisΔSV and the reference histogram RefHisΔSVx of each fish species used for the calculation of the likelihood Lx are drawn in the histogram display window 601.

The likelihood Lx of mackerel, related to the actual measurement histogram HisΔSV, is drawn with a bar 620A, along with a percentage value, in the likelihood display window 602A. Here, the level of the bar 620A is adjusted according to the calculated likelihood, the maximum level of the bar indicating a likelihood of 100%. Furthermore, the colour of the bar 620A is set with colour gradation corresponding to the value of the likelihood Lx.

The likelihood Lx of herring, related to the actual measurement histogram HisΔSV, is drawn with a bar 620B, along with a percentage value, in the likelihood display window 602B. Here, in the same way as for the bar 620A, the level and the colour of the bar 620B is adjusted according to the calculated likelihood.

By performing such display, a fisherman can distinguish the position and the fish species of the detected fish school by simply looking at the echo of the fish school, the position of the water bottom, the histograms, the likelihood values, and the colour of the bars based on the likelihood values. For example, in the example of Fig. 10, the actual measurement histogram HisΔSV substantially matches with the reference histogram RefHisΔSVxH of herring, and one can easily recognize that the likelihood of herring is very high. On the other hand, the actual measurement histogram HisΔSV is different from the reference histogram RefHisΔSVxM of mackerel, and one can easily recognize that the likelihood of mackerel is low. Thereby, a fisherman can easily determine that the detected fish school is a herring school.

Furthermore, when using the embodiment according to the present invention, even if within the setting area ARe set by a fisherman for fish species discrimination purposes, the water bottom is present or if an air bubble blocking condition occurs or if any other unfavourable situations for fish species discrimination occur, these influences are rejected and the fish species discrimination can be performed. Thereby, more accurate fish species discrimination can be automatically performed, without the fisherman's awareness.

Note that in the explanation above, an example where only one setting area ARe per display screen is described but a plurality of setting areas ARe may also be set. In this case, an application area RAr is established for every setting area ARe, and it is then possible to perform fish species discrimination.

Moreover, in the explanation above, an example where the setting area ARe is set by an operator input such as a fisherman input is described. However, by detecting echo level distribution along the ping and depth directions, it is also possible for example to automatically surround an area where echo signals with a signal level above a given level tend to gather, and set this area in a setting area ARe. Here, it is better to filter the depth information by setting a filter set with an appropriate depth value based for example on the geographical position of the fishing ground.

Moreover, in the explanation above, the reference DB 400 is described as a static database but it is also possible to use a dynamic database where external reference histograms can be inputted to appropriately update the database.

Moreover, in the explanation above, an example using the volume backscattering strength SV is described but it is also possible to use for every fish species the difference of any reflection strength characteristics, such as the so-called target strength TS. Here, when the target strength TS is used, it is more effective than the volume backscattering strength if applied to single fish rather than fish school.

Moreover, in the explanation above, an example performing a correlation processing for the calculation of the similarity data is described but the likelihood Lx may be calculated using another method, as long as it reflects the similarity between the actual measurement histogram His$\Delta$SV and the reference histogram RefHis$\Delta$SVx. For example, the $\Delta$SV values at which the peaks of the histograms occur or the peak level values may also be used.

Moreover, in the above explanation of the similarity, the likelihood is obtained from a correlation processing but the similarity may also be calculated based on feature(s) extracted from the histogram. For example, the similarity may be calculated with at least one of the following items or an appropriate combination of two or more items: the height of the histogram, the width of the histogram, the standard deviation of the histogram, the variance of the histogram, the mean value of the histogram, the median of the histogram, and the $\Delta$SV value for which the mode of the histogram occurs. Here, when the volume backscattering strength difference $\Delta$SV values are arranged in a histogram, the height of the histogram corresponds to the value of the frequency (or the number of occurrence) at which the frequency (or the number of occurrence) of the observations is the highest. The width of the histogram corresponds to range of the volume backscattering strength difference $\Delta$SV values where the frequency (or the number of occurrence) of the observations is above a given level.

In the foregoing specification, a specific embodiment of the present invention has been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of present invention. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a," "has ...a," "includes ...a," "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. An apparatus or structure that is "configured" in a certain way is configured in at least that way, but may also be configured in ways that are not listed.

## Claims

1. Underwater detection apparatus (1) for detecting a target object by acquiring underwater echo signals at fixed timing intervals, comprising:

   operation area specification means (80) operable to specify a setting area (ARe) in a depth direction and a ping direction to be used for the calculation of target-specific information of said target object, said setting area having a shallowest depth and a deepest depth;
   target information calculation means (41, 42, 43) operable to calculate said target-specific information based on said echo signals; and
   depth information acquisition means (70) operable to acquire water bottom depth information (Dep) based on said echo signals,
   **characterised in that**:

the operation area specification means (80) is operable to specify a setting area (ARe) for discriminating a fish species;

the apparatus further comprises operation area setting means (44) operable to receive the setting area (ARe) from the operation area specification means (80) and the water bottom depth information (Dep) from the depth information acquisition means (70),

wherein the operation area setting means (44) is operable to perform a process of establishing an application area (RAr) for discriminating a fish species based on the setting area (ARe) specified by said operation area specification means (80) and the water bottom depth information (Dep) acquired by said depth information acquisition means (70), wherein said application area (RAr) is established based on the presence or absence of said water bottom depth information (Dep) at each said fixed timing interval and based on whether the water bottom depth information (Dep) is between the shallowest depth and deepest depth of the setting area (ARe); and

the target information calculation means (41, 42, 43) is operable to discriminate a fish species based on echo signals within said application area (RAr).

2. Apparatus according to claim 1, wherein:

the operation area setting means (44) is operable to establish an application area (RAr) for calculating a histogram (HisΔSV); and

the target information calculation means (41, 42, 43) is operable to calculate said histogram (HisΔSV) based on echo signals within said application area (RAr).

3. Apparatus according to claim 1 or 2, wherein said operation area setting means (44) is arranged such that, when said water bottom depth information (Dep) is not available at a given first timing, said operation area setting means (44) searches for the water bottom depth information at a different second timing, separated from said first timing by a predetermined time interval, and depending on the search result, it is decided whether said first timing at which the water bottom depth information is not available is set into said application area (RAr) or not.

4. Apparatus according to claim 3, wherein said operation area setting means (44) is arranged to search for said water bottom depth information (Dep) at a plurality of different second timings, separated from said first timing at which said water bottom depth information is not available by a predetermined time interval.

5. Apparatus according to claim 3 or 4, wherein said operation area setting means (44) is arranged such that, considering the origin of a time axis to be set on said first timing at which said water bottom depth information (Dep) is not available, said operation area setting means (44) searches for the water bottom depth information on both sides of the origin of the time axis.

6. Apparatus according to claim 5, wherein said operation area setting means (44) is arranged such that said first timing at which said water bottom depth information (Dep) is not available is not set into said application area, when searching for said water bottom depth information on both sides of the origin of the time axis, if said water bottom depth information could be found on both sides.

7. Apparatus according to any preceding claim, wherein said operation area setting means (44) is arranged to establish said application area (RAr) from said shallowest depth to the depth corresponding to said water bottom depth information (Dep) when said water bottom depth information is detected between said shallowest depth and said deepest depth.

8. Apparatus according to any preceding claim, wherein said echo signals are acquired from ultrasound signals transmitted at different frequencies.

9. Apparatus according to any preceding claim, wherein said target information calculation means (41, 42, 43) comprises:

reflection strength difference calculation means (41) operable to calculate difference values of the echo signals at different frequencies;

histogram calculation means (42) operable to calculate a histogram of said difference values; and

similarity calculation means (43) operable to calculate a characteristic similarity between said histogram of the difference values and a reference histogram that is set for every type of target object.

10. Apparatus according to claim 9, wherein the difference value of said echo signals at different frequencies is the difference value of volume backscattering strength (SV) of said echo signals at different frequencies.

11. Apparatus according to any preceding claims, wherein the operation area specification means (80) is a user input interface operable to receive a user input for specifying the setting area (ARe).

12. Apparatus according to any of the preceding claims, wherein the operation area specification means (80) comprises means for automatically surrounding an area where echo signals with a signal level above a given level tend to gather, and for specifying this area as the setting area (ARe).

13. Echo sounder apparatus, comprising the apparatus of any of the preceding claims, wherein said target object is at least one of a fish school or a single fish.

14. A method of detecting a target object by acquiring underwater echo signals at fixed timing intervals, the method comprising the steps of:

specifying a setting area (ARe) in a depth direction and a ping direction to be used for the calculation of target-specific information of said target object, said setting area having a shallowest depth and a deepest depth;
calculating said target-specific information based on said echo signals; and
acquiring water bottom depth information (Dep) based on said echo signals;
**characterised in that**:

said target-specific information is for discriminating a fish species;
the method further comprises performing a process of establishing an application area (RAr) for discriminating a fish species based on the setting area (ARe) and the water bottom depth information (Dep), wherein said application area (RAr) is established based on the presence or absence of said water bottom depth information (Dep) at each said fixed timing interval and based on whether the water bottom depth information (Dep) is between the shallowest depth and deepest depth of the setting area (ARe); and
the step of calculating said target-specific information comprises calculating said information for discriminating a fish species based on echo signals within said application area (RAr).

15. A method according to claim 14, wherein said echo signals are acquired from ultrasound signals transmitted at different frequencies.

## Patentansprüche

1. Unterwassererkennungsvorrichtung (1) zum Erkennen eines Zielobjekts durch Akquirieren von Echosignalen unter Wasser in festen Zeitintervallen, umfassend:

ein Einsatzgebietsfestlegungsmittel (80), das betreibbar ist, um ein Rahmengebiet (ARe) in einer Tiefenrichtung und einer Ping-Richtung zu spezifizieren, das zur Berechnung von zielspezifischer Information des besagten Zielobjekts zu verwenden ist, wobei besagtes Rahmengebiet eine flachste Tiefe und eine tiefste Tiefe aufweist;
ein Zielinformationsberechnungsmittel (41, 42, 43), das bedienbar ist, um besagte zielspezifische Information basierend auf besagten Echosignalen zu berechnen; und
ein Tiefeninformationsakquirierungsmittel (70), das bedienbar ist, um Gewässergrundtiefeinformation (Dep) basierend auf besagten Echosignalen zu akquirieren,
**dadurch gekennzeichnet, dass**:

das Einsatzgebietsfestlegungsmittel (80) bedienbar ist, um ein Rahmengebiet (ARe) zum Unterscheiden einer Fischart zu spezifizieren;
die Vorrichtung ferner ein Einsatzgebietseinstellungsmittel (44) umfasst, das bedienbar ist, um das Rahmengebiet (ARe) von dem Einsatzgebietsfestlegungsmittel (80) und die die Gewässergrundtiefeinformation (Dep) von dem Tiefeninformationsakquirierungsmittel (70) zu empfangen,
wobei das Einsatzgebietseinstellungsmittel (44) bedienbar ist, um einen Prozess des Erstellens eines Anwendungsgebiets (RAr) zum Unterscheiden einer Fischart basierend auf dem Rahmengebiet (ARe), das durch besagtes Einsatzgebietsfestlegungsmittel (80) spezifiziert wurde, und der Gewässergrundtiefeinformation (Dep), die durch besagtes Tiefeninformationsakquirierungsmittel (70) akquiriert wurde, durchzuführen, wobei besagtes Anwendungsgebiet (RAr) basierend auf der Anwesenheit oder Abwesenheit besagter Gewässergrundtiefeninformation (Dep) in jedem festen Zeitintervall und basierend darauf, ob die Gewässergrundtiefeninformation (Dep) zwischen der flachsten Tiefe und der tiefsten Tiefe des Rahmengebiets (ARe) liegt, erstellt ist; und

das Zielinformationsberechnungsmittel (41, 42, 43) ist bedienbar, um eine Fischart basierend auf Echosignalen innerhalb besagten Anwendungsgebiets (RAr) zu unterscheiden.

2. Vorrichtung nach Anspruch 1, wobei:

das Einsatzgebietseinstellungsmittel (44) bedienbar ist, um ein Anwendungsgebiet zur Berechnung eines Histogramms (His△SV) zu erstellen; und
das Zielinformationsberechnungsmittel (41, 42, 43) bedienbar ist, um besagtes Histogramm (His△SV) basierend auf Echosignalen innerhalb besagten Anwendungsgebiets (RAr) zu berechnen.

3. Vorrichtung nach Anspruch 1 oder 2, wobei besagtes Einsatzgebietseinstellungsmittel (44) ausgestaltet ist, so dass, wenn besagte Gewässergrundtiefeninformation (Dep) zu einer gegebenen ersten Zeit nicht verfügbar ist, besagtes Einsatzgebietseinstellungsmittel (44) nach der Gewässergrundtiefeinformation zu einer anderen zweiten Zeit sucht, die von besagter erster Zeit durch ein vorbestimmtes Zeitintervall getrennt ist und abhängig von dem Suchergebnis wird entschieden ob besagte erste Zeit, zu welcher die Gewässergrundtiefeinformation nicht verfügbar ist, in besagtes Anwendungsgebiet (RAr) hinein gesetzt wird oder nicht.

4. Vorrichtung nach Anspruch 3, wobei besagtes Einsatzgebietseinstellungsmittel (44) ausgestaltet ist, um nach besagter Gewässergrundtiefeinformation (Dep) zu einer Vielzahl von verschiedenen Zeiten zu suchen, die von besagter erster Zeit, zu welcher besagte Gewässergrundtiefeinformation nicht verfügbar ist, durch ein vorbestimmtes Zeitintervall getrennt sind.

5. Vorrichtung nach Anspruch 3 oder 4, wobei besagtes Einsatzgebietseinstellungsmittel (44) ausgestaltet ist, so dass, unter Berücksichtigung, dass der Ursprung einer Zeitachse zu besagter erster Zeit, zu welcher besagte Gewässergrundtiefeinformation (Dep) nicht verfügbar ist, gesetzt ist, besagtes Einsatzgebietseinstellungsmittel (44) die Gewässergrundtiefeinformation auf beiden Seiten des Ursprungs der Zeitachse sucht.

6. Vorrichtung nach Anspruch 5, wobei besagtes Einsatzgebietseinstellungsmittel (44) ausgestaltet ist, so dass besagte erste Zeit, zu welcher besagte Gewässergrundtiefeinformation (Dep) nicht verfügbar ist, nicht in besagtes Anwendungsgebiet hinein gesetzt wird, während dem Suchen nach besagter Gewässergrundtiefeinformation auf beiden Seiten des Ursprungs der Zeitachse, wenn besagte Gewässergrundtiefeinformation auf beiden Seiten gefunden werden konnte.

7. Vorrichtung nach einem der vorherigen Ansprüche, wobei besagtes Einsatzgebietseinstellungsmittel (44) ausgestaltet ist, um besagtes Anwendungsgebiet (RAr) von besagter flachster Tiefe zu der Tiefe zu erstellen, die besagter Gewässergrundtiefeinformation (Dep) entspricht, wenn besagte Gewässergrundtiefeinformation (Dep) zwischen der flachsten Tiefe und der tiefsten Tiefe liegt.

8. Vorrichtung nach einem der vorherigen Ansprüche, wobei besagte Echosignale aus Ultraschallsignalen akquiriert werden, die mit verschiedenen Frequenzen übertragen werden.

9. Vorrichtung nach einem der vorherigen Ansprüche, wobei besagtes Zielinformationsberechnungsmittel (42, 42, 43) umfasst:

ein Reflexionsstärkedifferenzberechnungsmittel (41), das bedienbar ist, um Differenzwerte der Echosignale bei verschiedenen Frequenzen zu berechnen;
ein Histogrammberechnungsmittel (42), das bedienbar ist, um ein Histogramm besagter Differenzwerte zu berechnen; und
ein Ähnlichkeitsberechnungsmittel (43), das bedienbar ist, um eine charakteristische Ähnlichkeit zwischen besagtem Histogramm der Differenzwerte und einem Referenzhistoramm, das für jeden Typ von Zielobjekt eingestellt ist, zu berechnen.

10. Vorrichtung nach Anspruch 9, wobei der Differenzwert besagter Echosignale bei verschiedenen Frequenzen der Differenzwert der Volumenrückstreustärke (SV) besagter Echosignale bei verschiedenen Frequenzen ist.

**11.** Vorrichtung nach einem der vorherigen Ansprüche, wobei das Einsatzgebietsfestlegungsmittel (80) eine Benutzereingabeschnittstelle ist, die bedienbar ist, um eine Benutzereingabe zum Festlegen des Rahmengebiets (ARe) zu empfangen.

**12.** Vorrichtung nach einem der vorherigen Ansprüche, wobei das Einsatzgebietsfestlegungsmittel (80) Mittel zum automatischen umschließen eines Gebiets, wo sich Echosignale mit einem Signalpegel über einem gegebenen Pegel neigen, sich zu sammeln, umfasst.

**13.** Echolotvorrichtung, umfassend die Vorrichtung nach einem der vorherigen Ansprüche, wobei besagtes Zielobjekt wenigstens ein Fischschwarm und/oder ein einzelner Fisch ist.

**14.** Verfahren zum Erkennen eines Zielobjekts durch Akquirieren von Echosignalen unter Wasser in festen Zeitintervallen, wobei das Verfahren folgende Schritte umfasst:

Festlegen eines Rahmengebiets (ARe) in einer Tiefenrichtung und einer Ping-Richtung, das zur Berechnung von zielspezifischer Information des besagten Zielobjekts zu verwenden ist, wobei besagtes Rahmengebiet eine flachste Tiefe und eine tiefste Tiefe aufweist;
Berechnen besagter zielspezifischer Information basierend auf besagten Echosignalen; und
Akquirieren von Gewässergrundtiefeinformation (Dep) basierend auf besagten Echosignalen,
**dadurch gekennzeichnet, dass**:

besagte zielspezifische Information dient zum Unterscheiden einer Fischart;
das Verfahren ferner ein Durchführen eines Prozesses zum Erstellen eines Anwendungsgebiets (RAr) zum Unterscheiden einer Fischart basierend auf dem Rahmengebiet (ARe) und der Gewässergrundtiefeinformation (Dep), wobei besagtes Anwendungsgebiet (RAr) basierend auf der Anwesenheit oder Abwesenheit besagter Gewässergrundtiefeninformation (Dep) in jedem festen Zeitintervall und basierend darauf, ob die Gewässergrundtiefeninformation (Dep) zwischen der flachsten Tiefe und der tiefsten Tiefe des Rahmengebiets (ARe) liegt, erstellt ist; und
der Schritt des Berechnens besagter zielspezifischer Information ein Berechnen besagter Information zum Unterscheiden einer Fischart basierend auf Echosignalen innerhalb besagten Anwendungsgebiets (RAr) umfasst.

**15.** Verfahren nach Anspruch 14, wobei besagte Echosignale aus Ultraschallsignalen akquiriert werden, die mit verschiedenen Frequenzen übertragen werden.

**Revendications**

**1.** Appareil de détection sous-marine (1) pour détecter un objet cible, en acquérant des signaux d'écho sous-marin à des intervalles de temps fixés, comprenant :

des moyens de spécification de zone d'opération (80) servant à spécifier une zone de réglage (ARe) dans une direction de profondeur et une direction Ping à utiliser pour le calcul d'informations spécifiques à une cible dudit objet cible, ladite zone de réglage ayant une profondeur la moins profonde et une profondeur la plus profonde ;
des moyens de calcul d'informations de cible (41, 42, 43) opérationnels pour calculer lesdites informations spécifiques à une cible sur la base desdits signaux d'écho ; et
des moyens d'acquisition d'informations de profondeur (70) opérationnels pour acquérir des informations de profondeur de fond d'eau (Dep) sur la base desdits signaux d'écho,
**caractérisé en ce que**:

les moyens de spécification de zone d'opération (80) sont opérationnels pour spécifier une zone de réglage (ARe) pour discriminer une espèce de poisson ;
l'appareil comprend en outre des moyens de réglage de zone d'opération (44) opérationnels pour recevoir la zone de réglage (ARe) à partir des moyens de spécification de zone d'opération (80) et des informations de profondeur de fond d'eau (Dep) à partir des moyens d'acquisition d'informations de profondeur (70),
dans lequel les moyens de réglage de zone d'opération (44) sont opérationnels pour réaliser un processus d'établissement d'une zone d'application (RAr) pour discriminer une espèce de poisson sur la base de la zone de réglage (ARe) spécifiée par lesdits moyens de spécification de zone d'opération (80) et des informations de profondeur de fond d'eau (Dep) acquises par lesdits moyens d'acquisition d'informations de profondeur (70), dans lequel ladite zone d'application (RAr) est établie sur la base de la présence ou de l'absence desdites informations de profondeur de fond d'eau (Dep) à chacun desdits intervalles de temps fixés et du fait que les informations de profondeur de fond d'eau (Dep) sont comprises ou non entre la profondeur la moins profonde et la profondeur la plus profonde de la zone de réglage (ARe) ; et

les moyens de calcul d'informations de cible (41, 42, 43) sont opérationnels pour discriminer une espèce de poisson sur la base de signaux d'écho à l'intérieur de ladite zone d'application (RAr).

2. Appareil selon la revendication 1, dans lequel :

les moyens de réglage de zone d'opération (44) sont opérationnels pour établir une zone d'application (RAr) pour calculer un histogramme (His$\Delta$SV) ; et

les moyens de calcul d'informations de cible (41, 42, 43) sont opérationnels pour calculer ledit histogramme (His$\Delta$SV) sur la base de signaux d'écho dans ladite zone d'application (RAr).

3. Appareil selon la revendication 1 ou 2, dans lequel lesdits moyens de réglage de zone d'opération (44) sont agencés de telle sorte que, lorsque lesdites informations de profondeur de fond d'eau (DEP) ne sont pas disponibles à un premier instant donné, lesdits moyens de réglage de zone d'opération (44) recherchent les informations de profondeur de fond d'eau à un second instant différent, séparé dudit premier instant d'un intervalle de temps prédéterminé, et en fonction du résultat de recherche, il est décidé si ledit premier instant auquel les informations de profondeur de fond d'eau ne sont pas disponibles est réglé ou non dans ladite zone d'application (RAr).

4. Appareil selon la revendication 3, dans lequel lesdits moyens de réglage de zone d'opération (44) sont agencés pour rechercher lesdites informations de profondeur de fond d'eau (Dep) à une pluralité de seconds instants différents, séparés dudit premier instant auquel lesdites informations de profondeur de fond d'eau ne sont pas disponibles, par un intervalle de temps prédéterminé.

5. Appareils selon la revendication 3 ou 4, dans lequel lesdits moyens de réglage de zone d'opération (44) sont agencés de telle sorte qu'en considérant l'origine d'un axe temporel à régler sur ledit premier instant auquel lesdites informations de profondeur de fond d'eau (Dep) ne sont pas disponibles, lesdits moyens de réglage de zone d'opération (44) recherchent les informations de profondeur de fond d'eau des deux côtés de l'origine de l'axe temporel.

6. Appareil selon la revendication 5, dans lequel lesdits moyens de réglage de zone d'opération (44) sont agencés de telle sorte que ledit premier instant auquel lesdites informations de profondeur de fond d'eau (Dep) ne sont pas disponibles n'est pas réglé dans ladite zone d'application, lors de la recherche desdites informations de profondeur de fond d'eau des deux côtés de l'origine de l'axe temporel, si lesdites informations de profondeur de fond d'eau ont pu être trouvées des deux côtés.

7. Appareil selon l'une quelconque des revendications précédentes, dans lequel lesdits moyens de réglage de zone d'opération (44) sont agencés pour établir ladite zone application (RAr) à partir de ladite profondeur la moins profonde vers la profondeur correspondant auxdites informations de profondeur de fond d'eau (Dep) lorsque lesdites informations de profondeur de fond d'eau sont détectées entre ladite profondeur la moins profonde et ladite profondeur la plus profonde.

8. Appareil selon l'une quelconque des revendications précédentes, dans lequel lesdits signaux sont acquis à partir de signaux ultrasonores transmis à des fréquences différentes.

9. Appareil selon l'une quelconque des revendications précédentes, dans lequel lesdits moyens de calcul d'informations de cible (41, 42, 43) comprennent :

des moyens de calcul de différence de force de réflexion (41) opérationnels pour calculer des valeurs de différence des signaux d'écho à des fréquences différentes ;

des moyens de calcul d'histogramme (42) opérationnels pour calculer un histogramme desdites valeurs de différence ; et

des moyens de calcul de similarité (43) opérationnels pour calculer une similarité caractéristique entre ledit histogramme des valeurs de différence et un histogramme de référence qui est fixé pour chaque type d'objet cible.

10. Appareil selon la revendication 9, dans lequel la valeur de différence desdits signaux d'écho à différentes fréquences est la valeur de différence de force de rétrodiffusion volumique (SV) desdits signaux d'écho à différentes fréquences.

11. Appareil selon l'une quelconque des revendications précédentes, dans lequel les moyens de spécification de zone d'opération (80) sont une interface d'entrée d'utilisateur opérationnels pour recevoir une entrée d'utilisateur pour spécifier la zone de réglage (ARe).

12. Appareil selon l'une quelconque des revendications précédentes, dans lequel les moyens de spécification de zone d'opération (80) comprennent des moyens pour entourer automatiquement une zone où des signaux d'écho avec un niveau de signal au-dessus d'un niveau donné ont tendance à se rassembler, et pour spécifier ce domaine en tant que zone de réglage (ARe).

13. Appareil échosondeur, comprenant l'appareil selon l'une quelconque des revendications précédentes, dans lequel ledit objet cible est au moins l'un d'un banc de poissons ou d'un poisson unique.

14. Procédé de détection d'un objet cible par l'acquisition de signaux d'écho sous-marins à des intervalles de temps fixés, le procédé comprenant les étapes consistant à :

spécifier une zone de réglage (ARe) dans une direction de profondeur et une direction Ping à utiliser pour le calcul d'informations spécifiques à une cible dudit objet cible, ladite zone de réglage ayant une profondeur la moins profonde et une profondeur la plus profonde ;
calculer lesdites informations spécifiques à une cible sur la base desdits signaux d'écho ; et
acquérir des informations de profondeur de fond d'eau (Dep) sur la base desdits signaux d'écho ;
**caractérisé en ce que** :

lesdites informations spécifiques à une cible sont pour discriminer une espèce de poisson ;
le procédé comprend en outre l'exécution d'un processus d'établissement d'une zone d'application (RAr) pour discriminer une espèce de poisson sur la base de la zone de réglage (ARe) et des informations de profondeur de fond d'eau (Dep), dans lequel ladite zone d'application (RAr) est établie sur la base de la présence ou de l'absence desdites informations de profondeur de fond d'eau (Dep) à chacun des intervalles de temps fixés et du fait que les informations de profondeur de fond d'eau (Dep) sont comprises ou non entre la profondeur la moins profonde et la profondeur la plus profonde de la zone de réglage (ARe) ; et
l'étape consistant à calculer lesdites informations spécifiques à une cible comprend le calcul desdites informations pour discriminer une espèce de poisson sur la base de signaux d'écho dans ladite zone d'application (RAr).

15. Procédé selon la revendication 14, dans lequel lesdits signaux d'écho sont acquis à partir de signaux ultrasonores émis à des fréquences différentes.

FIG.1

$$\text{START}$$

S101

CALCULATE VOLUME BACKSCATTERING STRENGTH DIFFERENCE $\Delta$SV

S102

ESTABLISH APPLICATION AREA RAr FOR HISTOGRAM CALCULATION

S103

CALCLATE ACTUAL MEASUREMENT HISTOGRAM His$\Delta$SV

S104

CALCULATE SIMILARITY Lx OF ACTUAL MEASUREMENT HISTOGRAM His$\Delta$SV AND REFERENCE HISTOGRAM RefHis$\Delta$SVx OF EACH FISH SPECIES

S105

DISPLAY FISH DISCRIMINATING INFORMATION SUCH AS SIMILARITY INFORMATION Lx

$$\text{RETURN}$$

FIG.2

```
                    ┌──────────────┐
                    │    START     │
                    └──────────────┘
                            │        S111
┌───────────────────────────────────────────────────────────────────────┐
│ ACQUIRE RECEPTION DATA Rxf1 AND Rxf2 AT FIRST ANDSECOND FREQUENCIES      │
│                    FOR EVERY PING AND DISTANCE                           │
└───────────────────────────────────────────────────────────────────────┘
                            │        S112
┌───────────────────────────────────────────────────────────────────────┐
│      CALCULATE VOLUME BACKSCATTERING STRENGTH SV1 AND SV2 OF             │
│         RECEPTION DATA OF FIRST AND SECOND FREQUENCIES                   │
│                    FOR EVERY PING AND DISTANCE                           │
└───────────────────────────────────────────────────────────────────────┘
                            │        S113
┌───────────────────────────────────────────────────────────────────────┐
│   CALCULATE VOLUME BACKSCATTERING STRENGTH DIFFERENCE ΔSV FOR            │
│                    EVERY PING AND DISTANCE                               │
└───────────────────────────────────────────────────────────────────────┘
                            │        S114
┌───────────────────────────────────────────────────────────────────────┐
│ CALCULATE CALCULATE VOLUME BACKSCATTERING STRENGTH DIFFERENCE            │
│                            ΔSV                                           │
└───────────────────────────────────────────────────────────────────────┘
                            │
                    ┌──────────────┐
                    │   RETURN     │
                    └──────────────┘
```

# FIG.3

START

**S211**
ACQUIRE SETTING AREA ARe FOR HISTOGRAM CALCULATION

**S212**
ACQUIRE DEPTH SEGMENT OF SETTING AREA ARe

**S213**
ACQUIRE DEPTH Dep

**S214**
DEPTH Dep WITHIN DEPTH SEGMENT? — NO

YES

**S215**
SET THE RANGE FROM THE SHALLOWEST DEPTH TO DEPTH Dep AS THE VALID RANGE

**S216**
SEARCH DEPTH Dep ON 2 PING SEGMENTS SERARATED FROM CURRENT PING

**S217**
Dep NOT IN ANY PING SEGMENTS? — NO

YES

**S219**
Dep IN BOTH PING SEGMENTS? — NO

YES

**S218**
SET THE WHOLE RANGE FROM THE SHALLOWEST DEPTH TO DEEPEST DEPTH AS THEVALID RANGE

**S220**
SET CURRENT PING AS INVALID

**S221**
ALL PINGS PROCESSED? — NO

YES

**S222**
ESTABLISH APPLICATION AREA RAr FOR HISTOGRAM CALCULATION

RETURN

FIG.4

20

DISPLAY SCREEN

910A

FISH SCHOOL

RAr

DEPTH

PING

FIG.5A

DISPLAY SCREEN

910B

FISH SCHOOL

RAr

WATER BOTTOM

DEPTH

PING

FIG.5B

FIG.6A

FIG.6B

FIG.6C

START

S301

ACQUIRE ACTUAL MEASUREMENT HISTOGRAM His$\Delta$SV

S302

READ OUT REFERENCE HISTOGRAM RefHis$\Delta$SVx OF FISH SPECIES

S303

CORRELATION PROCESSING OF
ACTUAL MEASUREMENT HISTOGRAM His$\Delta$SV AND
REFERENCE HISTOGRAM RefHis$\Delta$SVx OF FISH SPECIES

S304

CALCULATE LIKELIHOOD Lx BASED ON CORRELATION PROCESSING RESULT

S305

CALCULATED LIKELIHOOD Lx OF ALL FISH SPECIES?

NO

YES

S306

OUTPUT LIKELIHOOD Lx OF ALL FISH SPPECIES AS SIMILARITY DATA

END

FIG.7

FIG.8A

FIG.8B

24

EP 2 410 349 B1

DISPLAY
SCREEN

600

Mackerel  9[%]

Herring 95[%]

FISH SCHOOL

SETTING
FRAME

WATER
BOTTOM

FIG.9

FIG.10

**EP 2 410 349 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4025555 B
- US 20080080317 A1
- JP 2005249398 A